(19) **Europäisches Patentamt / European Patent Office / Office européen des brevets**

(11) **EP 4 572 477 A1**

(12) ## EUROPEAN PATENT APPLICATION
published in accordance with Art. 153(4) EPC

(43) Date of publication:
**18.06.2025 Bulletin 2025/25**

(21) Application number: **23852185.0**

(22) Date of filing: **26.04.2023**

(51) International Patent Classification (IPC):
**H04W 72/0446** *(2023.01)* **H04W 28/06** *(2009.01)*
**H04W 72/0453** *(2023.01)* **H04W 72/1268** *(2023.01)*

(52) Cooperative Patent Classification (CPC):
**H04W 28/06; H04W 72/0446; H04W 72/0453;
H04W 72/1268**

(86) International application number:
**PCT/JP2023/016440**

(87) International publication number:
**WO 2024/034199 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022 JP 2022128841**

(71) Applicant: **Panasonic Intellectual Property
Corporation
of America
Torrance, CA 90504 (US)**

(72) Inventors:
• **NUNOME, Tomoya**
**Kadoma-shi, Osaka 571-0057 (JP)**
• **SUZUKI, Hidetoshi**
**Kadoma-shi, Osaka 571-0057 (JP)**

(74) Representative: **Grünecker Patent- und
Rechtsanwälte
PartG mbB
Leopoldstraße 4
80802 München (DE)**

(54) **BASE STATION, TERMINAL, AND COMMUNICATION METHOD**

(57) This base station comprises a control circuit that individually sets a first transmission timing for uplink in a first time resource and a second transmission timing for uplink in a second time resource different from the first time resource, and a reception circuit that receives a signal on the basis of the first transmission timing.

**100**

FIG. 4

# EP 4 572 477 A1

**Description**

Technical Field

The present disclosure relates to a base station, a terminal, and a communication method.

Background Art

In 3rd Generation Partnership Project (3GPP), the specification of the physical layer in Release 17 New Radio access technology (NR) has been completed as functional extension of 5th Generation mobile communication systems (5G). NR supports functions for realizing Ultra Reliable and Low Latency Communication (URLLC) in addition to enhanced Mobile Broadband (eMBB) to satisfy requirements of high speed and high capacity (see, e.g., Non-Patent Literature (hereinafter referred to as "NPL") 1 to NPL 6).

Citation List

Non-Patent Literature

NPL 1
3GPP TS 38.211 V17.2.0, "NR; Physical channels and modulation (Release 17)," June 2022
NPL 2
3GPP TS 38.212 V17.2.0, "NR; Multiplexing and channel coding (Release 17)," June 2022
NPL 3
3GPP TS 38.213 V17.2.0, "NR; Physical layer procedure for control (Release 17)," June 2022
NPL 4
3GPP TS 38.214 V17.2.0, "NR; Physical layer procedures for data (Release 17)," June 2022
NPL 5
3GPP TS 38.215 V17.1.0, "NR; Physical layer measurements (Release 17)," June 2022
NPL 6
3GPP TS 38.331 V17.1.0, "NR; Radio Resource Control (RRC) protocol specification (Release 17)", June 2022

Summary of Invention

However, there is room for consideration regarding a control method of a transmission timing in radio communication.

A non-limiting embodiment of the present disclosure facilitates providing a base station, a terminal, and a communication method each capable of appropriately controlling a transmission timing in radio communication.

A base station according to an embodiment of the present disclosure includes: control circuitry, which, in operation, individually configures a first transmission timing of an uplink in a first time resource and a second transmission timing of an uplink in a second time resource different from the first time resource; and reception circuitry, which, in operation, receives a signal based on the first transmission timing and the second transmission timing.

It should be noted that general or specific embodiments may be implemented as a system, an apparatus, a method, an integrated circuit, a computer program, a storage medium, or any selective combination thereof.

According to an embodiment of the present disclosure, it is possible to appropriately control the transmission timing in radio communication.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates examples of a Duplex system;
FIG. 2 is a diagram illustrating exemplary transmission timings and reception timings in downlink and uplink;

FIG. 3 is a diagram illustrating exemplary transmission and reception timings in Subband non-overlapping full duplex (SBFD);

FIG. 4 is a block diagram illustrating an exemplary configuration of a part of a base station;

FIG. 5 is a block diagram illustrating an exemplary configuration of a part of a terminal;

FIG. 6 is a block diagram illustrating an exemplary configuration of the base station;

FIG. 7 is a block diagram illustrating an exemplary configuration of the terminal;

FIG. 8 is a sequence diagram illustrating exemplary operations of the base station and the terminal;

FIG. 9 is a diagram illustrating exemplary transmission timings and reception timings of downlink and uplink;

FIG. 10 is a diagram illustrating an exemplary configuration of a Transient period;

FIG. 11 is a diagram illustrating an exemplary architecture of a 3GPP NR system;

FIG. 12 is a schematic diagram illustrating functional split between Next Generation-Radio Access Network (NG-RAN) and 5th Generation Core (5GC);

FIG. 13 is a sequence diagram of a Radio Resource Control (RRC) connection setup/reconfiguration procedure;

FIG. 14 is a schematic diagram illustrating usage scenarios of enhanced Mobile BroadBand (eMBB), massive Machine Type Communications (mMTC), and Ultra Reliable and Low Latency Communications (URLLC); and

FIG. 15 is a block diagram illustrating an exemplary 5G system architecture for a non-roaming scenario.

Description of Embodiments

Hereinafter, embodiments of the present disclosure will be described in detail with reference to the accompanying drawings.

[Subband Non-Overlapping Full Duplex (SBFD)]

"Study on evolution of NR duplex operation" was approved as a Study Item for Release 18. One of the main topics of the Study Item is the support for subband non-overlapping full duplex (also referred to as SBFD or Cross Division Duplex (XDD)).

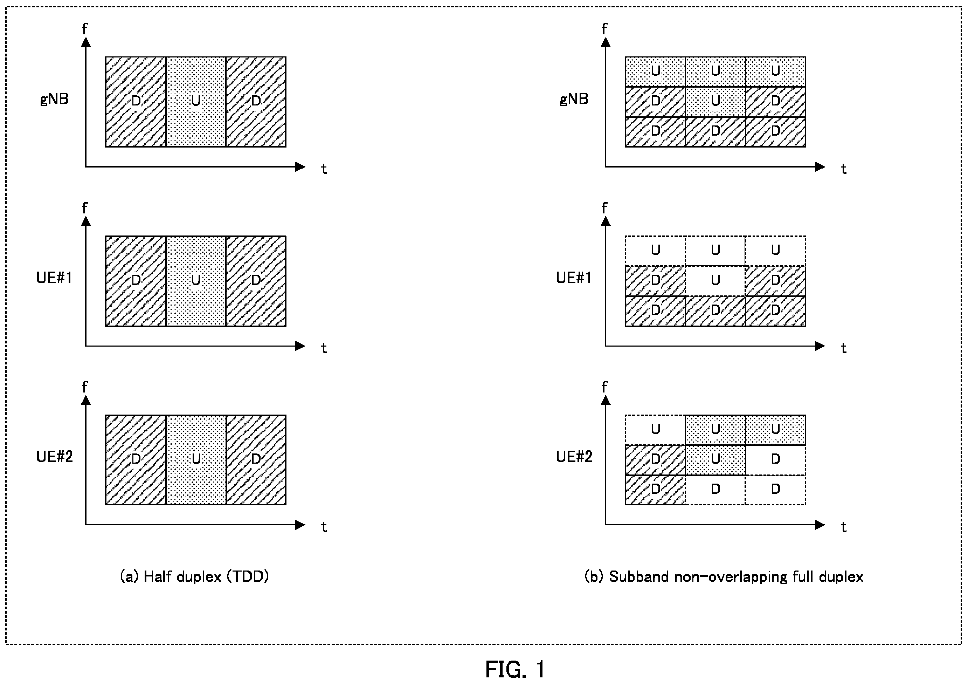

Parts (a) and (b) in FIG. 1 illustrate examples of a Duplex system. In parts (a) and (b) in FIG. 1, the vertical axis represents frequency, and the horizontal axis represents time. Further, "U" indicates uplink transmission and "D" indicates downlink transmission in parts (a) and (b) in FIG. 1.

Part (a) in FIG. 1 illustrates an example of Time Division Duplex (TDD) in half duplex. In part (a) in FIG. 1, UE #1 and UE #2 are terminals (UE: User Equipment) connected to a base station (for example, gNB). In the half duplex illustrated in part (a) in FIG. 1, the transmission direction (for example, downlink or uplink) in a certain time resource may be common between the base station and the terminal. For example, the transmission direction does not differ between terminals in a certain time resource.

Part (b) in FIG. 1 illustrates an example of SBFD. In SBFD, the frequency resource (or frequency band) is divided into a plurality of bands (also referred to as, for example, subbands, RB sets, or subBWPs (Bandwidth parts)), and supports transmission in different directions (for example, downlink or uplink) in a subband unit. Note that, in SBFD, the terminal performs transmission and reception of either the uplink or the downlink in a certain time resource, and does not perform transmission and reception of the other. In contrast, the base station can simultaneously transmit and receive both uplink and downlink in SBFD. Note that, there may be a case where the terminal does not use a resource in a transmission direction in a certain time resource (for example, the resource indicated by the dotted line in part (b) in FIG. 1).

[Timing Alignment]

For example, the transmission timing of uplink in a terminal may be configured earlier than the downlink reception timing by $T_{TA}$ (for example, a parameter related to the timing advance between the downlink and the uplink). $T_{TA}$ is defined, for example, by the following Equation 1.

[1]

$$T_{\mathrm{TA}} = \left( N_{\mathrm{TA}} + N_{\mathrm{TA,offset}} + N_{\mathrm{TA,adj}}^{\mathrm{common}} + N_{\mathrm{TA,adj}}^{\mathrm{UE}} \right) T_{\mathrm{c}} \quad \ldots \text{(Equation 1)}$$

Here, $N_{TA}$ (for example, a parameter related to the timing advance between the downlink and the uplink, or a timing configuration value) may be used at the base station to align the uplink reception timing from each terminal. For example, in a case where the uplink reception timing from each terminal is aligned with the downlink transmission timing, $N_{TA}$ may be configured to twice the propagation time (for example, a time corresponding to the round-trip propagation delay time) for each terminal. For example, since the propagation delay time can vary depending on the position of the terminal (for example, the distance between the base station and the terminal), $N_{TA}$ may be adjusted for each terminal by a Timing Advance command.

$N_{TA,offset}$ (for example, an offset value used for the calculation of the timing advance) may be configured for the time for switching from uplink reception to downlink transmission in the base station. $N_{TA,offset}$ may be configured, for example, by higher layer signaling (for example, Cell-specific Radio Resource Control (RRC) signaling). Alternatively, a pre-defined default value (or a fixed value) may be configured as $N_{TA,offset}$.

Note that $N_{TA}$ and $N_{TA,offset}$ may be configured depending on the implementation of the base station, for example.

$N_{TA,adj}^{common}$ and $N_{TA,adj}^{UE}$ (for example, parameters related to timing adjustment) are parameters used in a Non-terrestrial network (NTN). In the following description, a case where $N_{TA,adj}^{common}$ and $N_{TA,adj}^{UE}$ are not used (for example, a case where $N_{TA,adj}^{common} = N_{TA,adj}^{UE} = 0$ is assumed) will be described as an example.

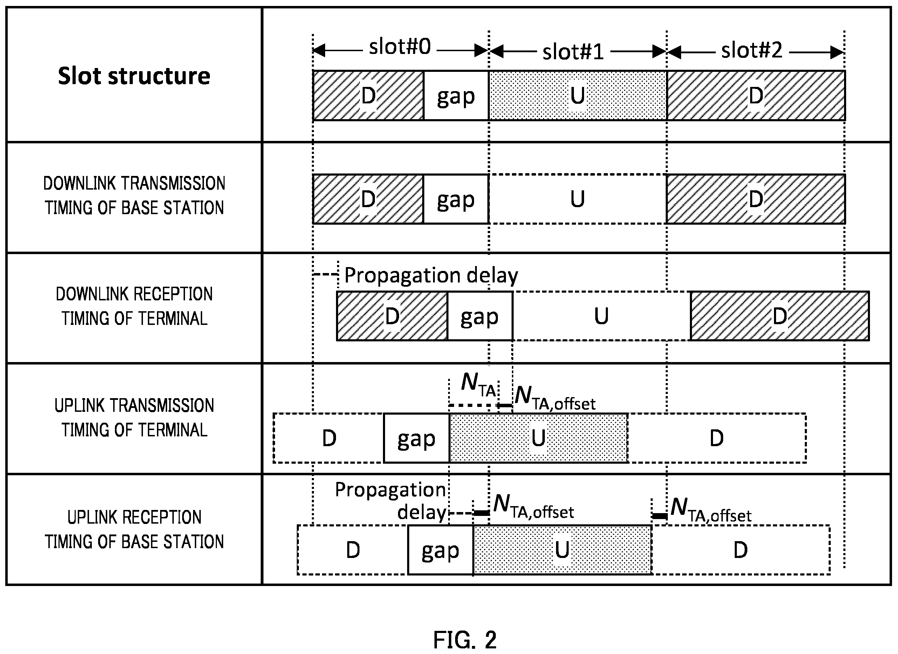

FIG. 2 illustrates an example of transmission and reception timings in a base station and a terminal.

In the example of FIG. 2, the transmission and reception timings in Slot #0, Slot #1, and Slot #2 will be described. In FIG. 2, "D" represents a downlink, "U" represents an uplink, and "gap" represents a gap section that is not used for transmission and reception.

In FIG. 2, the first line illustrates the structure of a slot, and the second to fifth lines illustrate the transmission timing and the reception timing for each of the base station and the terminal. Further, in the example illustrated in FIG. 2, a time corresponding to twice the propagation delay time is configured for $N_{TA}$, and a value other than 0 (for example, a value larger than 0) is configured for $N_{TA,offset}$.

The second line in FIG. 2 illustrates the downlink transmission timing of the base station, and the third line in FIG. 2 illustrates the downlink reception timing of the terminal. As illustrated in FIG. 2, the downlink reception timing of the terminal is a timing delayed by a propagation delay time compared to the downlink transmission timing of the base station.

The fourth line in FIG. 2 illustrates the uplink transmission timing of the terminal, and the fifth line in FIG. 2 illustrates the uplink reception timing of the base station. As illustrated in FIG. 2, the uplink transmission timing of the terminal is configured earlier than the downlink reception timing of the terminal by $(N_{TA} + N_{TA,offset})T_c$ (for example, $T_{TA}$ as shown in Equation 1) (note that $T_c$ is omitted in FIG. 2). Further, as illustrated in FIG. 2, the uplink reception timing of the base station is a timing delayed by the propagation delay time compared to the uplink transmission timing of the terminal.

In FIG. 2, when the transmission and reception timings of the base station (for example, the downlink transmission timing in the second line and the uplink reception timing in the fifth line) are compared, it can be seen that the uplink reception timing is earlier than the downlink transmission timing by $N_{TA,offset}$. Thus, in FIG. 2, since an interval (gap period) of $N_{TA,offset}$ occurs between the uplink reception completion of slot #1 (for example, the fifth line) and the downlink transmission start of slot #2 (for example, the second line), the base station can perform the process of switching from the uplink reception to the downlink transmission in this period.

[Timing alignment in SBFD]

In SBFD, the subband for the downlink and the subband for the uplink can be present in the same time resource (for example, a slot or a symbol, hereinafter, sometimes referred to as "slot/symbol"). For example, in SBFD, when $N_{TA,offset}$ is configured to a value other than 0 (for example, a value greater than 0), it is assumed that the symbol timing (or the symbol boundary) is shifted between the downlink and the uplink in the base station. When the symbol boundary is shifted between the downlink and the uplink, self-interference from the downlink subband to the uplink subband possibly increases in the base station.

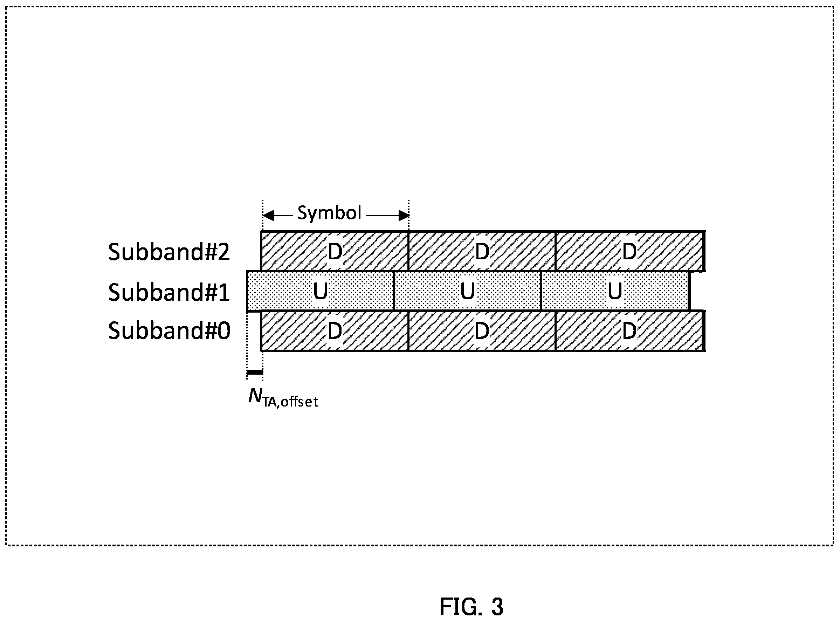

FIG. 3 illustrates exemplary transmission and reception timings of a base station in SBFD. In the example illustrated in FIG. 3, Subband #0 and Subband #2 are assigned to the downlink, and Subband #1 is assigned to the uplink. Further, in FIG. 3, $N_{TA,offset}$ is configured to a value greater than 0. As illustrated in FIG. 3, the symbol timing (or symbol boundary) of Subband #1 in the uplink is earlier than the symbol timing (or symbol boundary) of Subband #0 and Subband #2 in the downlink. For this reason, in FIG. 3, the symbol timing (or the symbol boundary) is shifted between Subband #1 and Subband #0 and Subband #2, and thus, the self-interference from Subband #0 or Subband #2 of the downlink to Subband #1 of the uplink possibly increases.

In a non-limiting embodiment of the present disclosure, a timing control method for suppressing interference between subbands in SBFD will be described.

[Overview of Communication System]

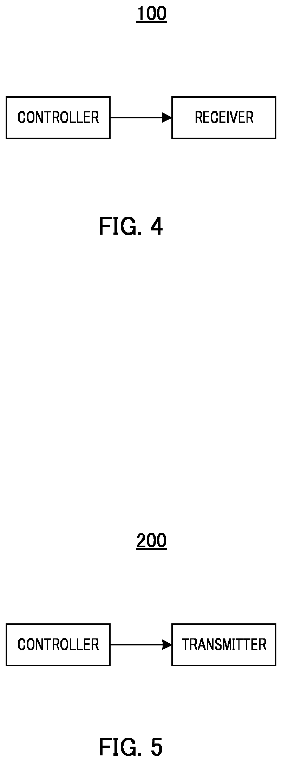

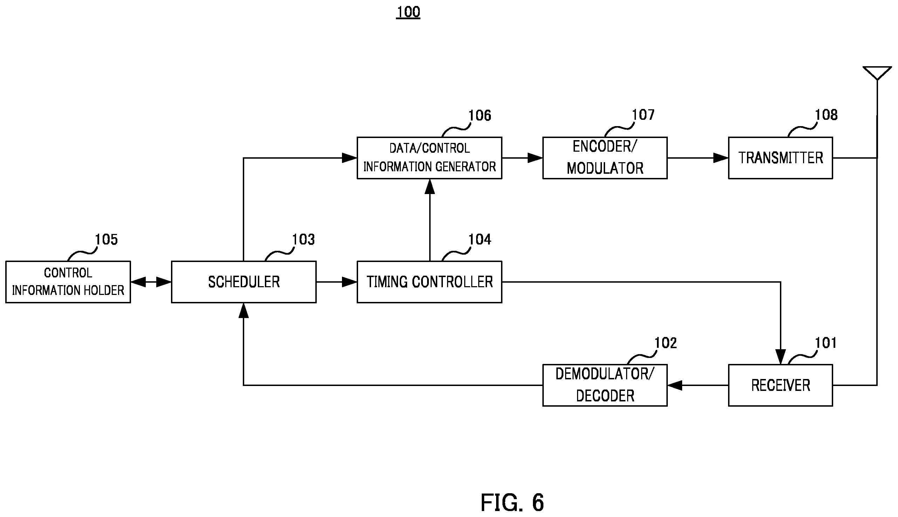

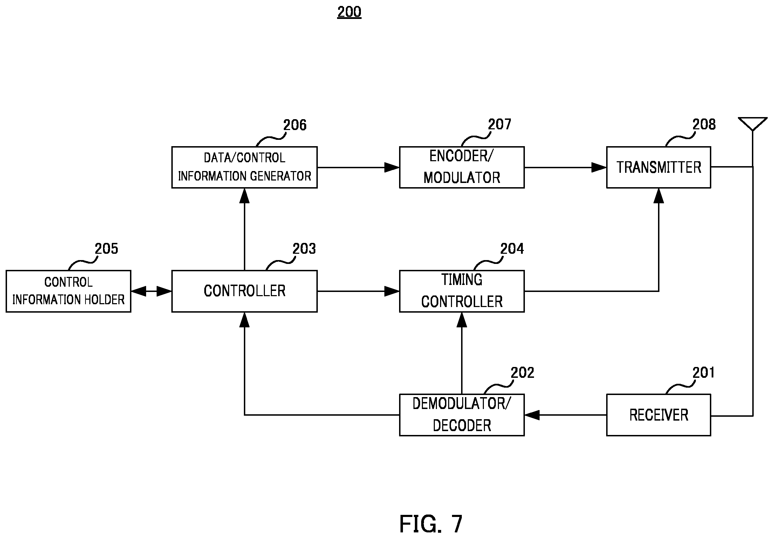

A communication system according to an aspect of the present disclosure may include, for example, base station 100 (for example, gNB) illustrated in FIGS. 4 and 6 and terminal 200 (for example, UE) illustrated in FIGS. 5 and 7. The communication system may include a plurality of base stations 100 and a plurality of terminals 200.

FIG. 4 is a block diagram illustrating an exemplary configuration of a part of base station 100 according to an aspect of the present disclosure. In base station 100 illustrated in FIG. 4, a controller (corresponding to, for example, control circuitry) individually configures a first transmission timing of an uplink in a first time resource and a second transmission timing of an uplink in a second time resource different from the first time resource. A receiver (corresponding to, for example, reception circuitry) receives a signal based on the first transmission timing and the second transmission timing.

FIG. 5 is a block diagram illustrating an exemplary configuration of a part of terminal 200 according to an aspect of the present disclosure. In terminal 200 illustrated in FIG. 5, a controller (for example, corresponding to control circuitry) individually configures a first transmission timing of an uplink in a first time resource and a second transmission timing of an uplink in a second time resource different from the first time resource. A transmitter (corresponding to, for example, transmission circuitry) transmits a signal based on the first transmission timing and the second transmission timing.

[Configuration of Base Station]

FIG. 6 is a block diagram illustrating an exemplary configuration of base station 100 according to an aspect of the present disclosure. In FIG. 6, base station 100 includes receiver 101, demodulator/decoder 102, scheduler 103, timing controller 104, control information holder 105, data/control information generator 106, encoder/modulator 107, and transmitter 108.

Note that, for example, at least one of demodulator/decoder 102, scheduler 103, timing controller 104, control information holder 105, data/control information generator 106, and encoder/modulator 107 may be included in the controller illustrated in FIG. 4, and receiver 101 may be included in the receiver illustrated in FIG. 4.

For example, receiver 101 performs reception processing such as down-conversion or A/D conversion on the received signal received via the antenna, and outputs the received signal after the reception processing to demodulator/decoder 102. For example, receiver 101 may perform reception processing in accordance with the timing configured by timing controller 104.

For example, demodulator/decoder 102 demodulates and decodes the received signal (for example, uplink signal) inputted from receiver 101 and outputs the decoding result to scheduler 103.

Scheduler 103 may perform scheduling for terminal 200, for example. Scheduler 103 performs scheduling of transmission and reception for each terminal 200 based on, for example, at least one of the decoding result inputted from demodulator/decoder 102 and the control information inputted from control information holder 105, and indicates generation of at least one of data and control information to data/control information generator 106. Further, scheduler 103 may indicate an uplink reception timing to timing controller 104. Furthermore, scheduler 103 may output control information on scheduling for terminal 200 to control information holder 105.

Timing controller 104 may determine information on the transmission timing of terminal 200 (for example, value of $N_{TA,offset}$, information on a time resource (for example, a slot or a symbol) to which the configured transmission timing is applied, and the like) in accordance with the indication from scheduler 103, for example, and may output the determined information to data/control information generator 106. Further, timing controller 104 may configure the reception timing for receiver 101 based on the determined information.

Control information holder 105 holds control information configured for each terminal 200, for example. The control information may include, for example, information on the transmission timing of each terminal 200. Control information holder 105 may, for example, output the held information to each component of base station 100 (for example, scheduler 103) as necessary.

For example, data/control information generator 106 generates at least one of data or control information in accordance with the indication from scheduler 103 and outputs a signal including the generated data or control information to encoder/modulator 107. Further, data/control information generator 106, for example, generates control information for terminal 200 based on information on the transmission timing of terminal 200 inputted from timing controller 104, and outputs a signal including the generated control information to encoder/modulator 107. Note that the generated data and control information may include, for example, at least one of signaling information of a higher layer and/or downlink control information. For example, the control information on the transmission timing of the terminal may be transmitted as control information in the physical layer (for example, control information on a PDCCH (Physical Downlink Control Channel)) or may be transmitted as signaling information (or a higher layer parameter) in a higher layer.

Encoder/modulator 107, for example, encodes and modulates the signal inputted from data/control information generator 106 (including, for example, data, control information, or information on the transmission timing of terminal 200), and outputs the modulated signal to transmitter 108.

Transmitter 108 performs transmission processing such as D/A conversion, up-conversion, or amplification on the signal inputted from encoder/modulator 107, for example, and transmits a radio signal obtained by the transmission processing to terminal 200 via the antenna.

[Configuration of Terminal]

FIG. 7 is a block diagram illustrating an exemplary configuration of terminal 200 according to an aspect of the present disclosure. In FIG. 7, terminal 200 includes receiver 201, demodulator/decoder 202, controller 203, timing controller 204, control information holder 205, data/control information generator 206, encoder/modulator 207, and transmitter 208.

Note that, for example, at least one of demodulator/decoder 202, controller 203, timing controller 204, control information holder 205, data/control information generator 206, and encoder/modulator 207 may be included in the controller illustrated in FIG. 5, and transmitter 208 may be included in the transmitter illustrated in FIG. 5.

For example, receiver 201 performs reception processing such as down-conversion or A/D conversion on the received signal received via the antenna, and outputs the received signal after the reception processing to demodulator/decoder 202.

For example, demodulator/decoder 202 demodulates and decodes the received signal inputted from receiver 201 and outputs the decoding result to controller 203. The decoding result may include, for example, signaling information of a higher layer and downlink control information. Further, for example, in a case where the decoding result includes the information on the transmission timing of terminal 200 (for example, the value of $N_{TA,offset}$, information on a time resource (for example, a slot or a symbol) to which the configured transmission timing is applied, and the like), demodulator/decoder 202 outputs the information to timing controller 204.

Controller 203 may determine, for example, whether to transmit or receive data or control information based on the decoding result (for example, data or control information) inputted from demodulator/decoder 202 and the control information inputted from control information holder 205. Controller 203 may, for example, in a case where the determination result indicates that data or control information is to be received, indicate reception of at least one of data and/or control information to receiver 201 and demodulator/decoder 202 (not illustrated). Further, for example, in a case where the determination result indicates that data or control information is to be transmitted, controller 203 may indicate generation of at least one of data and/or control information to data/control information generator 206. Furthermore, controller 203 may, for example, indicate configuration of a transmission timing to timing controller 204. Moreover, controller 203 may output control information on the configuration of the transmission timing to control information holder 205.

Timing controller 204 may determine the transmission timing based on, for example, the information on the transmission timing inputted from demodulator/decoder 202 and the control information on the configuration of the transmission timing inputted from controller 203, and may configure the transmission timing for transmitter 208.

Control information holder 205, for example, holds control information inputted from controller 203, and outputs the held information to each component (for example, controller 203) as necessary.

Data/control information generator 206 generates data or control information, for example, in accordance with an indication from controller 203, and outputs a signal including the generated data or control information to encoder/modulator 207.

Encoder/modulator 207, for example, encodes and modulates the signal inputted from data/control information generator 206 and outputs the modulated transmission signal to transmitter 208.

Transmitter 208 performs transmission processing such as D/A conversion, up-conversion, or amplification on the signal inputted from encoder/modulator 207, for example, and transmits a radio signal obtained by the transmission processing via the antenna to base station 100. For example, transmitter 208 may perform the transmission processing according to the transmission timing configured by timing controller 204.

[Operations of Base Station 100 and Terminal 200]

Exemplary operations of base station 100 and terminal 200 having the above configurations will be described.

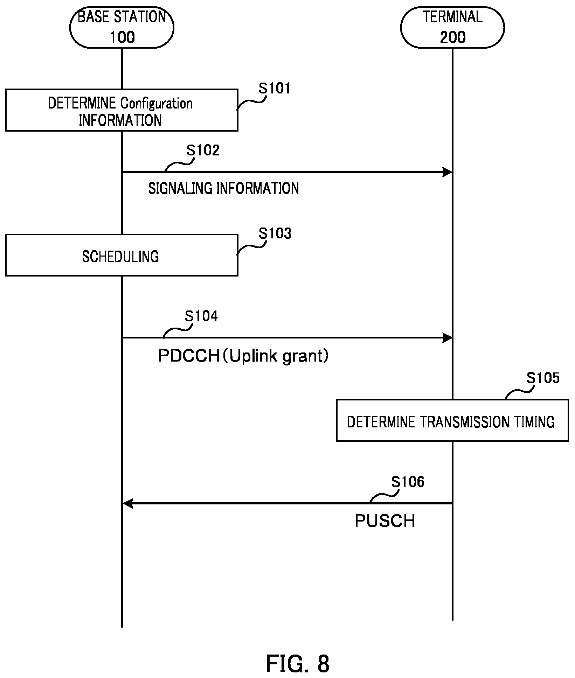

FIG. 8 is a sequence diagram illustrating exemplary operations of base station 100 and terminal 200.

In FIG. 8, for example, base station 100 determines information on a configuration such as a configuration of a transmission timing of terminal 200 in a specific time resource (for example, a slot/symbol) (S101).

Base station 100 transmits, for example, signaling information of a higher layer including the determined configuration information to terminal 200 (S102).

Base station 100 performs, for example, scheduling of data transmission and reception for terminal 200 (S103). At this time, base station 100 determines whether the resource scheduled for terminal 200 is included in the specific time resource (for example, a slot/symbol).

Base station 100 indicates uplink transmission (for example, transmission of a Physical Uplink Shared Channel (PUSCH)) to terminal 200 using a PDCCH (for example, including Uplink grant) based on the scheduling result, for example (S104). At this time, for example, base station 100 may indicate, to terminal 200, information on whether the resource to which the uplink transmission is allocated is the specific time resource (for example, a slot/symbol) (for example, information on the type of the slot/symbol).

Terminal 200 determines the uplink transmission timing (for example, PUSCH transmission timing) based on the PDCCH (Uplink grant) transmitted from base station 100, for example (S105). For example, terminal 200 may determine whether the uplink transmission timing (allocation resource) indicated by base station 100 corresponds to the specific time resource (for example, a slot or a symbol) or to another time resource different from the specific time resource, and may determine (or configure, adjust) the transmission timing of PUSCH.

Terminal 200 transmits PUSCH based on the PDCCH (Uplink grant) transmitted from base station 100 and the determined transmission timing (S106).

[Uplink Transmission Timing Configuration Method]

A method for configuring an uplink transmission timing of terminal 200 in base station 100 (for example, timing controller 104) will be described. Note that terminal 200 (for example, timing controller 204) may configure the uplink transmission timing, assuming the method for configuring the uplink transmission timing performed by base station 100, for example.

In the present embodiment, base station 100 and terminal 200 individually configure (or adjust) an uplink transmission timing in a specific time resource (for example, slot/symbol) and an uplink transmission timing in another time resource (for example, slot/symbol) different from the specific time resource.

Hereinafter, methods 1 to 3 related to the uplink transmission timing configuration will be described.

[Method 1]

In Method 1, base station 100 may configure $N_{TA,offset}$ (offset value for the transmission timing) for an SBFD symbol or an SBFD candidate symbol (for example, corresponding to a specific time resource) and $N_{TA,offset}$ for another symbol (for example, a normal symbol with a single transmission direction) that is different from the SBFD symbol and the SBFD candidate symbol to be different from each other.

For example, base station 100 may configure $N_{TA,offset}$ to 0 for the SBFD symbol or the SBFD candidate symbol. Further, for example, base station 100 may configure $N_{TA,offset}$ to a value different from that for the SBFD symbol and the BFD candidate symbol (for example, a value equal to or greater than 0) for a normal symbol (for example, a symbol with a single transmission direction).

Note that, as will be described later, the same $N_{TA,offset}$ as a normal symbol may be configured for the SBFD candidate symbol.

Here, the "SBFD symbol" represents, for example, a symbol to which SBFD is actually applied (for example, a symbol in which a plurality of subbands with different transmission directions are present in the same symbol).

Further, the "SBFD candidate symbol" represents a symbol to which SBFD may be applied. The SBFD candidate symbol may be, for example, a symbol to which SBFD is applied (an SBFD symbol) or a symbol to which SBFD is not applied (for example, a normal symbol) depending on the traffic situation. For example, the SBFD candidate symbol may be configured (or changed, overwritten) to either an SBFD symbol or a normal symbol by signaling from base station 100 or the like.

Further, for example, different $N_{TA,offset}$ may be configured between SBFD symbols.

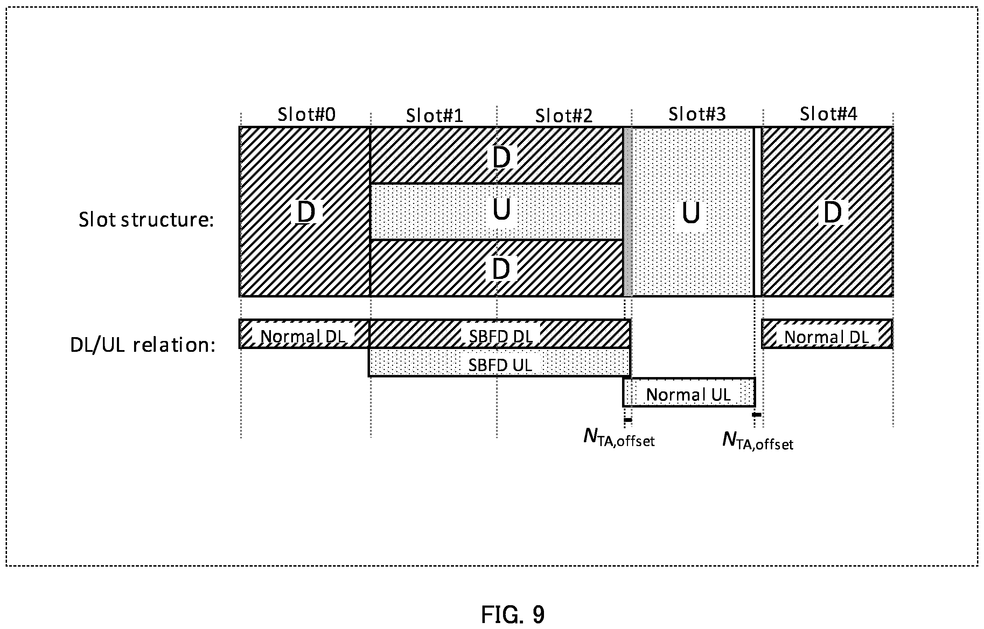

FIG. 9 illustrates exemplary transmission and reception timings according to Method 1.

An example of FIG. 9 illustrates the transmission and reception timings in five slots, Slot #0 to Slot #4. For example, Slot #0, Slot #3, and Slot #4 are slots composed of normal symbols (symbols with a single transmission direction), and Slot #1 and Slot #2 are slots composed of SBFD symbols. Further, as an example, three subbands are configured on the SBFD symbols in Slot #1 and Slot #2.

Further, "DL/UL relation" at the bottom of FIG. 9 represents the symbol type (for example, a normal symbol or an SBFD symbol) and the transmission and reception timing at base station 100. For example, "Normal DL" represents a downlink slot composed of normal symbols, and "Normal UL" represents an uplink slot composed of normal symbols. Further, for example, "SBFD DL" represents a downlink slot (or a downlink subband) composed of SBFD symbols, and "SBFD UL" represents an uplink slot (or an uplink subband) composed of SBFD symbols.

As illustrated in FIG. 9, $N_{TA,offset}$ in an uplink slot (Normal UL) composed of normal symbols is configured to a value greater than 0. Thus, as illustrated in FIG. 9, the symbol timing of Slot #3 is advanced by $N_{TA,offset}$, and a gap corresponding to $N_{TA,offset}$ exists between Slot #3 (Normal UL) and Slot #4 (Normal DL).

Meanwhile, as illustrated in FIG. 9, $N_{TA,offset}$ in the uplink subband (SBFD UL) in Slot #1 and Slot #2 each composed of SBFD symbols is configured to 0. Thus, as illustrated in FIG. 9, the symbol timing of the subband (SBFD UL) in the uplink in Slot #1 and Slot #2 is the same as the symbol timing of the subband (SBFD DL) in the downlink, and thus the symbol timings (or the symbol boundary) of SBFD UL and SBFD DL align.

Therefore, in Slot #1 and Slot #2 each composed of SBFD symbols in FIG. 9, the symbol boundaries of a plurality of subbands align, and thus, it is possible to suppress self-interference from a subband of the downlink of SBFD (SBFD DL) to a subband of the uplink of SBFD (SBFD UL).

Note that, in Method 1, which symbol is configured as an SBFD symbol (or an SBFD candidate symbol) (for example, the symbol type) may be indicated to terminal 200 by the following indication method.

<Indication Method 1>

In Indication Method 1, whether the symbol is an SBFD symbol (or symbol type) is indicated using UE-specific DCI.

For UE-specific DCI, DCI format 0_0, 0_1, 0_2, 1_0, 1_1, or 1_2 may be used, for example, and another DCI format may also be used.

For example, the UE-specific DCI may indicate whether the resource (for example, a resource used for PUSCH, Physical Uplink Control Channel (PUCCH), or Sounding Reference Signal (SRS)) scheduled by DCI is a normal symbol or an SBFD symbol.

Note that base station 100 can indicate the symbol type using UE-specific DCI after scheduling. For example, base station 100 can indicate the symbol type to terminal 200 after determining whether to use each symbol assigned to terminal 200 as an SBFD symbol or as a normal symbol. Thus, in Indication Method 1, it is not necessary to use an SBFD candidate symbol, and thus, base station 100 may configure an SBFD symbol instead of an SBFD candidate symbol.

Indication examples of Indication Method 1 will be described below.

Example 1:

The symbol type (either a normal symbol or an SBFD symbol) may be indicated by using a 1-bit field in UE-specific DCI. For example, a 1-bit field may be added to DCI. For example, a field value of "0" may indicate a normal symbol, and a field value of "1 " may indicate an SBFD symbol.

Example 2:

The symbol type (either a normal symbol or an SBFD symbol) may be indicated by reusing an existing field in UE-specific DCI. For example, fields for configuring time domain resources such as "Time domain resource assignment," "PUCCH resource indicator," or "PDSCH-to-HARQ_feedback timing indicator" may be reused.

For example, in the "Time domain resource assignment," information (for example, information in a table format) on the association between a resource in the time domain (for example, a configuration value of a parameter related to a resource in the time domain) and a value (for example, a value related to an index) indicated by a field of DCI is preconfigured by RRC signaling. For example, in the "Time domain resource assignment," one of the configurations (for example, one of the parameters) of the table may include a configuration indicating either an "SBFD symbol" or a "normal symbol" as a symbol type.

The indication examples of Indication Method 1 have been described above.

According to Indication Method 1, by UE-specific DCI, base station 100 can indicate, to terminal 200, whether the symbol is an SBFD symbol in addition to the indication of uplink transmission, thereby reducing the overhead of the indication.

<Indication Method 2>

In Indication Method 2, whether the symbol is an SBFD symbol (or symbol type) is indicated using group-common DCI.

For the group-common DCI, for example, DCI format 2_0, 2_1, 2_2, 2_3, 2_4, 2_5, 2_6, or 2_7 may be used, or another DCI format may also be used.

In Indication Method 2, base station 100 can indicate the symbol type using group-common DCI after scheduling, and thus, in the same manner as Indication Method 1, not an SBFD candidate symbol but an SBFD symbol may be configured.

An indication example of Indication Method 2 is described below.

For example, a bit field indicating whether the symbol is an SBFD symbol may be added to DCI format 2_0.

For example, the added field may indicate the symbol types (for example, either of an SBFD symbol and a normal symbol) of a plurality of slots corresponding to a Slot format indicator (SFI). For example, in a case where the slot formats of a maximum of five slots can be indicated by SFI, a 5-bit field may be added to DCI format 2_0 for the indication of the symbol types. Bits of the added bit field (for example, five bits) may respectively correspond to the slots (for example, five slots) indicated by the SFI.

For example, in the added bit field, a bit value of "0" may indicate a normal symbol, and a bit value of "1" may indicate an SBFD symbol. For example, in a case where the value indicated in a 5-bit bit field is "0b01110", the second, third, and fourth slot symbols of the five slots indicated by the SFI are SBFD symbols, and the other symbols (first and fifth symbols) are normal symbols.

Note that the number of slots for which the slot format is indicated by the SFI is not limited to five slots, and may be another number of slots. The size (number of bits) of the bit field added to the group-common DCI (for example, DCI format 2_0) may be configured depending on the number of slots for which the slot format is indicated by the SFI.

Here, for example, for uplink transmission that is semi-statically configured, such as PUSCH transmission by a Configured grant or periodic SRS transmission, transmission is not indicated by UE-specific DCI, and the transmission is performed without DCI. For this reason, it is difficult to indicate the symbol type for a transmission that is configured semi-statically by Indication Method 1, which uses UE-specific DCI. In contrast, in Indication Method 2, it is possible to indicate whether the symbol is an SBFD symbol by group common DCI, and thus, Indication Method 2 is applicable to transmission that is configured semi-statically.

<Indication Method 3>

In Indication Method 3, whether the symbol is an SBFD symbol (or symbol type) is indicated using semi-static signaling (for example, RRC signaling).

For example, a plurality of slots/symbols may be configured as SBFD candidate symbols.

In Indication Method 3, the symbol type is configured semi-statically before the scheduling is determined. For example, in a case where a certain symbol is configured (or determined) as an SBFD symbol before the scheduling is determined, the symbol cannot be switched to a normal symbol depending on the communication environment or the like, thereby possibly reducing the flexibility of the scheduling. Thus, in Indication Method 3, for example, base station 100 may configure whether each symbol is an SBFD candidate symbol.

An indication example of Indication Method 3 is described below.

For example, a configuration of an SBFD candidate symbol may be added to "tdd-UL-DL-ConfigurationDedicated," which is RRC signaling that individually configures a transmission direction of a symbol for each terminal. For example, configurations of the first (or start, head) symbol number (for example, any of 0 to 13) in which the SBFD candidate symbol is mapped in a slot, and the number of SBFD candidate symbols (or allocation length, for example, any of 0 to 14) may be added. For example, when the symbol number = 0 and the number of symbols = 14 are configured as the configurations of the SBFD candidate symbol, all of the symbols in the slot are configured as SBFD candidate symbols. Note that the symbol number and the number of symbols are merely examples, and other values may be used.

In Indication Method 3, a symbol that can be an SBFD symbol (for example, a symbol to which SBFD is possibly applied) can be configured as an SBFD candidate symbol. As described above, Indication Method 1 using UE-specific DCI is difficult to be applied to a transmission that is configured semi-statically (for example, Configured grant), whereas Indication Method 3 is applicable to a transmission that is configured semi-statically because the symbol type can be semi-statically configured for a plurality of slots/symbols.

Indication Methods 1 to 3 have been described above.

Note that any of Indication Methods 1 to 3 may be combined.

For example, a case where all three Indication Methods 1 to 3 are combined is described.

For example, base station 100 semi-statically configures a symbol that can be an SBFD symbol as an SBFD candidate symbol by Indication Method 3. Base station 100 may also configure the symbol type (SBFD symbol or normal symbol) for uplink transmission dynamically scheduled by DCI after scheduling by Indication Method 1, and may configure the symbol type (SBFD symbol or normal symbol) for uplink transmission semi-statically configured by Indication Method 2. At this time, the symbol type of the SBFD candidate symbol configured by Indication Method 3 may be overwritten to either an SBFD symbol or a normal symbol in accordance with the indication by Indication Method 1 or Indication Method 2. As described above, by combining Indication Methods 1 to 3, it is possible to flexibly switch the symbol type, thereby enhancing the flexibility of scheduling and enhancing the utilization efficiency of resources.

For example, $N_{TA,offset}$ for each of an SBFD symbol and a normal symbol may be individually configured. For example, $N_{TA,offset}$ for an SBFD symbol may be configured to 0. Further, for example, $N_{TA,offset}$ for a normal symbol may be configured to a value of 0 or more.

Further, in Method 1, for example, $N_{TA,offset}$ for an SBFD candidate symbol may be configured to 0 (for example, the same value as the SBFD symbol) or the same value as a normal symbol. Whether to configure $N_{TA,offset}$ for the SBFD candidate symbol to 0 or to the same value as a normal symbol may be determined, for example, by a semi-static configuration or by definition.

In a case where $N_{TA,offset}$ for the SBFD candidate symbol is configured to 0, the default operation of the SBFD candidate symbol may be the same as the operation of the SBFD symbol. For example, in a case where there is no indication of the symbol type for the SBFD candidate symbol, the SBFD candidate symbol may be handled as having subbands. Further, in a case where $N_{TA,offset}$ for the SBFD candidate symbol is configured to the same value as a normal symbol, the default operation of the SBFD candidate symbol may be the same as the operation of the normal symbol. For example, in a case where there is no indication of the symbol type for the SBFD candidate symbol, the SBFD candidate symbol may be handled as having no subband. Note that, in a case where the symbol type for the SBFD candidate symbol is indicated, an operation (or the configuration of $N_{TA,offset}$) corresponding to the indicated symbol type may be performed.

The case where three Indication Methods 1 to 3 are combined has been described above.

As described above, Method 1 allows for the alignment of the symbol timings (or the symbol boundaries) between the uplink subband and the downlink subband in the SBFD symbol and the SBFD candidate symbol, thereby reducing self-interference in base station 100.

Further, in Method 1, the symbol type can be flexibly switched from an SBFD candidate symbol to an SBFD symbol (for example, a symbol with subbands) or a normal symbol (for example, a symbol without a subband), thereby enhancing the flexibility of scheduling and enhancing the utilization efficiency of resources.

[Method 2]

In Method 2, base station 100 may configure $N_{TA,offset}$ (the offset value of the transmission timing) in a specific time resource (for example, a slot/symbol) that is configured dynamically or semi-statically and $N_{TA,offset}$ in another time resource different from the specific time resource to be different from each other.

For example, base station 100 may configure $N_{TA,offset}$ for a specific slot/symbol to 0, and configure $N_{TA,offset}$ for another slot/symbol to a value different from the value for the specific slot/symbol (for example, a value equal to or greater than 0).

Hereinafter, a specific slot/symbol will be referred to as a "transmission timing change slot/symbol (or transmission timing change symbol)," and another slot/symbol different from the transmission timing change slot/symbol will be referred to as a "normal slot/symbol (or normal symbol)."

In Method 2, which symbol is configured as the transmission timing change symbol (for example, the symbol type) may be indicated to terminal 200 by the following Indication Method.

<Indication Method 1>

In Indication Method 1, whether the symbol is a transmission timing change symbol (or symbol type) is indicated using UE-specific DCI.

For example, DCI format 0_0, 0_1, 0_2, 1_0, 1_1, or 1_2 may be used for UE-specific DCI, and another DCI format may also be used.

For example, the UE-specific DCI may indicate whether the resource (for example, a resource used for PUSCH, PUCCH, or SRS) scheduled by DCI is a normal symbol or a transmission timing change symbol.

Indication examples of Indication Method 1 are described below.

Example 1:

The symbol type (either a normal symbol or a transmission timing change symbol) may be indicated using a 1-bit field in UE-specific DCI. For example, a field value of "0" may indicate a normal symbol, and a field value of "1" may indicate a transmission timing change symbol.

Example 2:

The symbol type (either a normal symbol or a transmission timing change symbol) may be indicated by reusing an existing field in UE-specific DCI. For example, fields for configuring resources in the time domain, such as "Time domain resource assignment," "PUCCH resource indicator," and "PDSCH-to-HARQ_feedback timing indicator," may be reused.

For example, in the "Time domain resource assignment," information (for example, information in a table format) on the association between a resource in the time domain (for example, a configuration value of a parameter related to a resource in the time domain) and a value (for example, a value related to an index) indicated by a field of DCI is preconfigured by RRC signaling. For example, in the "Time domain resource assignment", one of the configurations (for example, one of the parameters) of the table may include a configuration indicating either a "transmission timing change symbol" or a "normal symbol" as a symbol type.

The indication examples of the Indication Method has been described above.

According to Indication Method 1, by UE-specific DCI, base station 100 can indicate, to terminal 200, whether the transmission timing is a transmission timing change symbol, in addition to the indication of the uplink transmission, thereby reducing the overhead of the indication.

<Indication Method 2>

In Indication Method 2, whether the symbol is a transmission timing change symbol (or symbol type) is indicated using group-common DCI.

For the group-common DCI, for example, DCI format 2_0, 2_1, 2_2, 2_3, 2_4, 2_5, 2_6, or 2_7 may be used, or another DCI format may also be used.

An indication example of Indication Method 2 is described below.

For example, a bit field indicating whether the symbol is a transmission timing change symbol may be added to DCI format 2_0.

For example, the added field may indicate the symbol types (for example, either a transmission timing change symbol or a normal symbol) of a plurality of slots corresponding to SFI. For example, in a case where the slot format of a maximum of five slots can be indicated by SFI, a 5-bit field may be added to DCI format 2_0 for the indication of the symbol types. Bits of the added bit field (for example, five bits) may respectively correspond to slots (for example, five slots) indicated by the SFI.

For example, in the added bit field, a bit value of "0" may indicate a normal symbol, and a bit value of "1" may indicate a transmission timing change symbol. For example, in a case where the value indicated in a 5-bit bit field is "0b01110," the second, third, and fourth slot symbols of the five slots indicated by the SFI are transmission timing change symbols, and the other symbols (first and fifth symbols) are normal symbols.

Note that the number of slots for which the slot format is indicated by the SFI is not limited to five slots, and may be another number of slots. The size (number of bits) of the bit field added to the group-common DCI (for example, DCI format 2_0) may be configured depending on the number of slots for which the slot format is indicated by the SFI.

Here, for example, for uplink transmission that is semi-statically configured, such as PUSCH transmission by a Configured grant or periodic SRS transmission, transmission is not indicated by UE-specific DCI, and the transmission is performed without DCI. For this reason, it is difficult to indicate the symbol type for a transmission that is configured semi-statically by Indication Method 1, which uses UE-specific DCI. In contrast, in Indication Method 2, it is possible to indicate whether the symbol is the transmission timing change symbol by group common DCI, and thus, Indication Method 2 is applicable to a transmission that is configured semi-statically.

<Indication Method 3>

In Indication Method 3, whether the symbol is a transmission timing change symbol (or symbol type) is indicate using semi-static signaling (for example, RRC signaling).

For example, a plurality of slots/symbols may be configured as transmission timing change symbols.

An indication example of Indication Method 3 is described below.

For example, the configuration of the transmission timing change symbol may be added to "tdd-UL-DL-ConfigurationDedicated," which is RRC signaling that individually configures the transmission direction of the symbol for each terminal. For example, configurations of the first (or start, head) symbol number (for example, any of 0 to 13) in which the transmission timing change symbol is mapped in a slot, and the number of transmission timing change symbols (or allocation length, for example, any of 0 to 14) may be added. For example, when the symbol number = 0 and the number of symbols = 14 are configured as the configurations of the transmission timing change symbol, all of symbols in the slot are configured as transmission timing change symbols. Note that the symbol number and the number of symbols are merely examples, and other values may be used.

For example, Indication Method 1 using UE-specific DCI is difficult to be applied to a transmission that is configured semi-statically (for example, Configured grant), whereas Indication Method 3 is applicable to a transmission that is configured semi-statically because the symbol type can be semi-statically configured for a plurality of slots/symbols.

Indication Methods 1 to 3 have been described above.

Note that, as in Method 1, any of Indication Methods 1 to 3 may be combined and used in Method 2.

Further, in Method 2, $N_{TA,offset}$ for each of a transmission timing change symbol and a normal symbol may be individually configured. For example, $N_{TA,offset}$ for a transmission timing change symbol may be configured to 0. Further, for example, $N_{TA,offset}$ for a normal symbol may be configured to a value different from that for the transmission timing change symbol (for example, a value of 0 or more).

In Method 2, by configuring $N_{TA,offset}$ for the transmission timing change symbol to 0, it is possible to align the symbol timings (or the symbol boundaries) between the uplink subband and the downlink subband in a case where the transmission timing change symbol is an SBFD symbol, thereby reducing self-interference in base station 100.

Further, in Method 2, terminal 200 adjusts the uplink transmission timing based on the indication from base station 100 (for example, information on the transmission timing change symbol) without identifying which symbol is an SBFD symbol. Thus, terminal 200 can operate without being aware of which symbol is an SBFD symbol, even in a case where SBFD is applied, for example. As described above, in Method 2, SBFD can be realized by a transparent method.

As described above, according to Method 2, it is possible to align the symbol timings between the uplink and the downlink in the transmission timing change symbols, and it is possible to reduce self-interference in base station 100 in SBFD. Further, according to Method 2, base station 100 can control subbands transparently, and can select whether to apply SBFD (for example, whether to allocate a subband to a symbol) depending on the communication environment (for example, the traffic load in the downlink and the uplink, the necessity of the coverage in the uplink, the requirement for delays, and the like), and thus, the degree of freedom in scheduling can be enhanced, and the utilization efficiency of resources can be enhanced.

Note that, in Method 2, different Equations 2 and 3 may be applied to the calculation of the uplink transmission timing for the transmission timing change symbol and the normal symbol, respectively.

[2] Normal symbol:

$$T_{\mathrm{TA}} = \left(N_{\mathrm{TA}} + N_{\mathrm{TA,offset}} + N_{\mathrm{TA,adj}}^{\mathrm{common}} + N_{\mathrm{TA,adj}}^{\mathrm{UE}}\right)T_{\mathrm{c}} \quad \ldots \text{(Equation 2)}$$

Transmission timing change symbol:

$$T_{\mathrm{TA}} = \left(N_{\mathrm{TA}} + N_{\mathrm{TA,offset}} + N_{\mathrm{TA,offset2}} + N_{\mathrm{TA,adj}}^{\mathrm{common}} + N_{\mathrm{TA,adj}}^{\mathrm{UE}}\right)T_{\mathrm{c}}$$

$$\ldots \text{(Equation 3)}$$

Here, the same value (common value) may be applied to $N_{\mathrm{TA,offset}}$ for both the normal symbol and the transmission timing change symbol. On the other hand, $N_{\mathrm{TA,offset2}}$ may be configured for terminal 200 that uses a transmission timing change symbol (for example, terminal 200 supporting the operation of SBFD), and need not be configured for terminal 200 that uses a normal symbol.

As described above, base station 100 may configure, for terminal 200, an offset value ($N_{\mathrm{TA,offset}}$) common to uplink transmission timings of a transmission timing change symbol and a normal symbol, and an offset value ($N_{\mathrm{TA,offset2}}$) specific to the uplink transmission timing of the transmission timing change symbol.

Further, $N_{\mathrm{TA,offset}}$ may be configured in a Cell-specific manner, for example, and may be shared with terminal 200 that does not support the transmission timing change symbol. Further, $N_{\mathrm{TA,offset2}}$ may be configured in a UE-specific manner, for example, and may be configured for terminal 200 supporting the transmission timing change symbol.

For example, a negative value in the same size as $N_{\mathrm{TA,offset}}$ (for example, a value that cancels $N_{\mathrm{TA,offset}}$) may be configured for $N_{\mathrm{TA,offset2}}$. For example, when $N_{\mathrm{TA,offset}} = 25600$ is configured, $N_{\mathrm{TA,offset2}} = -25600$ may be configured. This allows the offset value ($N_{\mathrm{TA,offset}} + N_{\mathrm{TA,offset2}}$) for the uplink transmission timing to be configured to 0 for the transmission timing change symbol, thereby aligning the symbol timings between the uplink subband and the downlink subband.

As described above, by adding $N_{\mathrm{TA,offset2}}$, coexisting with an existing parameter ($N_{\mathrm{TA,offset}}$) is allowed, and thus, it is possible to improve compatibility with an existing operation in a case where terminal 200 performs an SBFD operation.

[Method 3]

In Method 3, an additional timing configuration value (for example, denoted as "$N_{\mathrm{TA}}$'") is applied to a specific time resource (for example, a specific slot/symbol, or transmission timing change symbol) that is configured dynamically or semi-statically.

For example, base station 100 may configure the configuration value ($N_{\mathrm{TA}}$') of the transmission timing in a specific slot/symbol and the configuration value ($N_{\mathrm{TA}}$) of the transmission timing in another slot/symbol (for example, a normal slot/symbol) to be different from each other.

For $N_{\mathrm{TA}}$', a configuration value (for example, an absolute value or an increase/decrease value (or a difference)) may be indicated separately from the existing $N_{\mathrm{TA}}$. The configuration value of $N_{\mathrm{TA}}$' may be indicated to terminal 200 by, for example, MAC signaling or RRC signaling.

Further, $N_{\mathrm{TA}}$ and $N_{\mathrm{TA}}$' may be individually controlled as different cumulative values. For example, the value of $N_{\mathrm{TA}}$ can be increased or decreased by the Timing Advance Command in MAC signaling. The value of $N_{\mathrm{TA}}$' may be increased or decreased to a different value using, for example, a Timing Advance Command different from that for $N_{\mathrm{TA}}$.

The transmission timing for a normal symbol and the transmission timing for a transmission timing change symbol may be calculated by Equations 4 and 5, respectively.

[3] Normal symbol:

$$T_{\text{TA}} = \left(N_{\text{TA}} + N_{\text{TA,offset}} + N_{\text{TA,adj}}^{\text{common}} + N_{\text{TA,adj}}^{\text{UE}}\right)T_{\text{c}} \quad \dots \text{(Equation 4)}$$

Transmission timing change symbol:

$$T_{\text{TA}} = \left(N'_{TA} + N_{\text{TA,offset}} + N_{\text{TA,adj}}^{\text{common}} + N_{\text{TA,adj}}^{\text{UE}}\right)T_{\text{c}} \quad \dots \text{(Equation 5)}$$

For example, the value of $N_{TA}'$ may be configured such that $N_{TA}' = N_{TA} - N_{TA,offset}$ for the transmission timing change symbol. This makes it possible to eliminate (or cancel) the influence of $N_{TA,offset}$ in the transmission timing change symbol. Accordingly, for example, in a case where SBFD is applied to a transmission timing change symbol, it is possible to align the symbol timings (or the symbol boundaries) between a downlink subband and an uplink subband in the SBFD symbol.

Note that the value of $N_{TA}'$ is not limited to the example described above. For example, $N_{TA}'$ can be increased or decreased by the Timing Advance Command, allowing for dynamic adjustment of the transmission timing under the control of base station 100. For example, by adjusting $N_{TA}'$, misalignment of the symbol timings between the uplink and the downlink in the SBFD symbol can be adjusted to fall within the cyclic prefix (CP), thereby reducing the timing misalignment between a normal symbol and a transmission timing change symbol.

Note that the transmission timing for the transmission timing change symbol may be calculated by the following Equation 6 instead of Equation 5.

[4]

$$T_{\text{TA}} = \left(N_{\text{TA}} + N_{\text{TA2}} + N_{\text{TA,offset}} + N_{\text{TA,adj}}^{\text{common}} + N_{\text{TA,adj}}^{\text{UE}}\right)T_{\text{c}} \quad \dots \text{(Equation 6)}$$

Here, $N_{TA2}$ is the same timing configuration value as $N_{TA}'$. This equation differs from the above-described equation only in format, and for example, the relationship $N_{TA}' = N_{TA} + N_{TA2}$ may be present. Base station 100 may configure, for terminal 200, a timing configuration value ($N_{TA}$) common to the transmission timing change symbol and the normal symbol, and a timing configuration value ($N_{TA2}$) specific to the transmission timing change symbol, for example.

Further, in Method 3, the Indication Method of Method 2 may be applied as a method for indicating which slot/symbol is the transmission timing change slot/symbol.

As described above, according to Method 3, it is possible to align the symbol timings of the uplink and the downlink in the transmission timing change symbol, and to reduce self-interference at base station 100 in SBFD. Further, according to Method 3, the timing of uplink transmission can be dynamically controlled using the Timing Advance Command, thereby enhancing the flexibility of timing control in base station 100. Further, according to Method 3, similarly to Method 2, base station 100 can control subbands transparently, and can select whether to apply SBFD (for example, whether to allocate a subband to a symbol) depending on the communication environment (for example, the traffic load of the downlink and the uplink, the necessity of the coverage of the uplink, the requirement for the delay, and the like), and thus, the degree of freedom in scheduling can be enhanced, and the utilization efficiency of resources can be enhanced.

Methods 1 to 3 related to the uplink transmission timing configuration have been described above.

As described above, in the present embodiment, base station 100 and terminal 200 adjust the uplink transmission timing in a specific time resource (for example, an SBFD symbol, an SBFD candidate symbol, or a transmission timing change symbol) and the uplink transmission timing in another time resource (for example, a normal symbol) individually, and transmit and receive signals based on each transmission timing.

Thus, for example, in a specific time resource to which SBFD is applied, it is possible to match the symbol timings (or the symbol boundary) between the uplink subband and the downlink subband, and it is possible to reduce self-interference from the downlink subband to the uplink subband. Meanwhile, for example, in other time resources where SBFD is not applied, the uplink reception performance in base station 100 can be enhanced by advancing the symbol timing of the uplink.

Thus, according to the present embodiment, it is possible to appropriately control the transmission timing in radio communication.

(Other Embodiments)

[Overlap of Symbols]

Since the transmission timing (for example, symbol timing) in the uplink may differ between an SBFD symbol (or a transmission timing change symbol) and a normal symbol, the symbols possibly overlap. For example, in the example illustrated in FIG. 9, the last symbol (SBFD symbol) of Slot #2 and the first symbol (normal symbol) of Slot #3 overlap. Thus, the same terminal 200 cannot perform uplink transmission using both the last symbol of Slot #2 and the first symbol of Slot #3. In order to avoid such an overlap, the following method may be applied.

<Method 1>

In Method 1, the later symbol is prioritized between the overlapping symbols.

For example, terminal 200 may transmit the signal of the later symbol between the overlapping symbols and need not transmit the signal of the earlier symbol (for example, the signal may be discarded or dropped). Further, base station 100 need not allocate a resource to the earlier symbol that overlaps with the later symbol by scheduling.

In the example illustrated in FIG. 9, terminal 200 need not transmit a signal in the last symbol of Slot #2, and base station 100 need not allocate a resource to the symbol.

<Method 2>

In Method 2, an SBFD symbol (or a transmission timing change symbol) is prioritized between the overlapping symbols.

For example, terminal 200 may transmit a signal of an SBFD symbol (or a transmission timing change symbol) between the overlapping symbols, and need not transmit a signal of a normal symbol. Further, base station 100 need not allocate a resource to a normal symbol that overlaps with an SBFD symbol (or a transmission timing change symbol) by scheduling.

In the example illustrated in FIG. 9, terminal 200 need not transmit a signal in the first symbol (normal symbol) of Slot #3, and base station 100 need not allocate a resource to the symbol.

Method 2 is effective, for example, in a case where it is necessary to improve the performance of an SBFD symbol (or a transmission timing change symbol). For example, in an SBFD symbol, the performance may be degraded due to interference between the uplink and the downlink. Prioritizing an SBFD symbol can improve the performance of the SBFD symbol or suppress the degradation of the performance since the transmission of the symbol is not discarded.

<Method 3>

In Method 3, a normal symbol is prioritized between the overlapping symbols.

For example, terminal 200 may transmit a signal of a normal symbol between the overlapping symbols and need not transmit a signal of an SBFD symbol (or a transmission timing change symbol). Further, base station 100 need not allocate a resource to an SBFD symbol (or transmission timing change symbols) that overlaps with a normal symbol by scheduling.

In the example illustrated in FIG. 9, terminal 200 need not transmit a signal in the last symbol (SBFD symbol or transmission timing change symbol) of Slot #2, and base station 100 need not allocate a resource to the symbol.

In a case where a normal symbol is shared between terminal 200 and an existing terminal (for example, in a case where transmission and reception are limited in SBFD symbols for an existing terminal), discarding the transmission of the normal symbol may affect the existing terminal operation. Thus, Method 3 is effective in the case of protecting the existing terminal operation.

[Transient period]

In transmission in continuous time resources (for example, slots/symbols), overlapping of Transient periods is assumed.

The transient period refers to, for example, a transition period of power in a case where transmission is turned ON/OFF or in a case where transmission is performed with different transmission powers.

In a case where the Transient periods of an SBFD symbol (or a transmission timing change symbol) and a normal symbol overlap, the Transient period may be configured by the following method.

<Method 1>

In Method 1, a Transient period is equally divided between both symbols.

For example, in a case where the Transient periods overlap, the Transient period may be equally divided between an SBFD symbol (or a transmission timing change symbol) and a normal symbol.

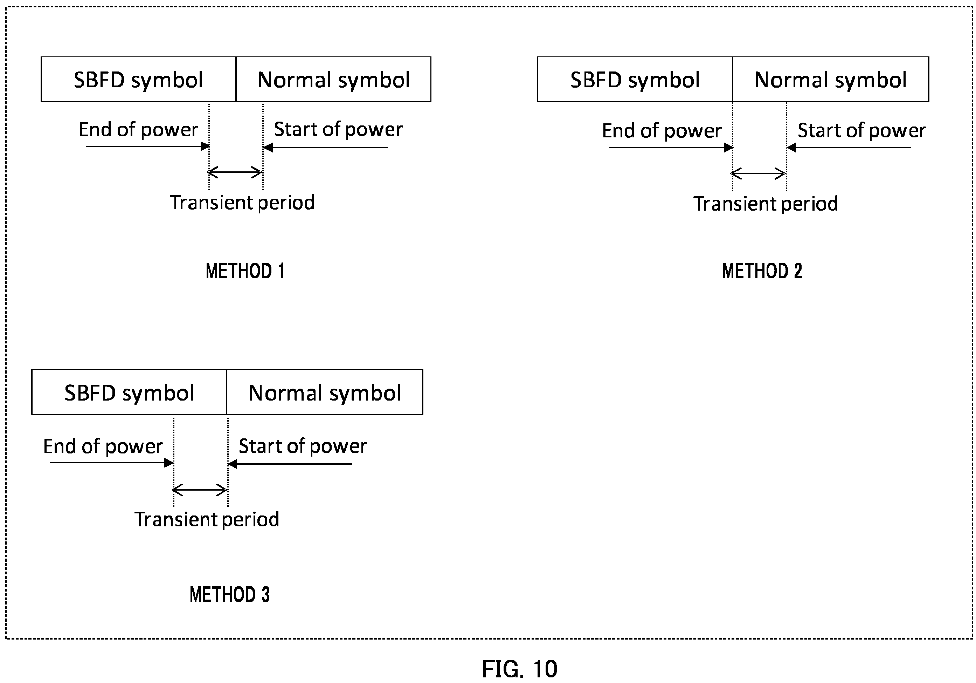

FIG. 10 illustrates an example of the configuration of the Transient period according to Method 1. In FIG. 10, "SBFD symbol" represents an SBFD symbol, and "Normal symbol" represents a normal symbol. As illustrated in FIG. 10, the Transient period equally spans both symbols.

Method 1 is effective, for example, in a case where it is desired that the influence of the Transient period is equally exerted on both the SBFD symbol (or transmission timing change symbol) and the normal symbol.

Note that a case where the Transient period is equally divided between the SBFD symbol (or transmission timing change symbol) and the normal symbol has been described herein, but the present disclosure is not limited thereto, and for example, the Transient period may be configured unevenly between the SBFD symbol (or transmission timing change symbol) and the normal symbol.

<Method 2>

In Method 2, an SBFD symbol (or transmission timing change symbol) is prioritized.

For example, in a case where the Transient period overlaps with continuous symbols, the Transient period is allocated to the period of a normal symbol.

FIG. 10 illustrates an example of the configuration of the Transient period according to Method 2. As illustrated in FIG. 10, the Transient period is configured in a Normal symbol.

Method 2 is effective in a case where it is necessary to improve the performance of an SBFD symbol (or transmission timing change symbol). For example, since the performance of the SBFD symbol is possibly degraded due to interference between the uplink and the downlink, prioritizing the SBFD symbol can improve the performance of the SBFD symbol, or suppress the degradation of the performance since the Transient period is configured outside the SBFD symbol.

<Method 3>

In Method 3, a normal symbols is prioritized.

For example, in a case where the Transient period overlaps with continuous symbols, the Transient period is allocated to the period of an SBFD symbol (or transmission timing change symbol).

FIG. 10 illustrates an example of the configuration of the Transient period according to Method 3. As illustrated in FIG. 10, the Transient period is configured in an SBFD symbol.

In a case where a normal symbol is shared between terminal 200 and an existing terminal (for example, in a case where transmission and reception are limited in SBFD symbols for an existing terminal), configuring the Transient period in the normal symbol period possibly affects the existing terminal operation. Thus, Method 3 is effective in the case of protecting the existing terminal operation.

A Transient period has been described above.

Further, in the above-described embodiments, the values such as the number of subbands, the number of terminals, the number of slots, the number of symbols, and parameters related to a transmission timing ($N_{TA}$, $N_{TA}'$, $N_{TA,offset}$, $N_{TA,offset2}$, the number of bits in an indication field in DCI) are merely examples and are not limited to the above described values.

(Supplement)

Information indicating whether or not terminal 200 supports the functions, operations, or processes described in the above-described embodiments may be transmitted (or indicated) from terminal 200 to base station 100 as, for example, capability information or capability parameters of terminal 200.

The capability information may include an information element (IE) indicating whether or not terminal 200 supports at least one of the functions, operations, or processes described in the above-described embodiments. Alternatively, the capability information may include an information element indicating whether or not terminal 200 supports a combination of any two or more of the functions, operations, or processes described in the above-described embodiments.

Based on, for example, capability information received from terminal 200, base station 100 may determine (or otherwise decide or assume) a function, operation, or process supported (or not supported) by terminal 200 which transmitted the capability information. Base station 100 may perform the operation, processing, or control according to a determination result based on the capability information. For example, base station 100 may control uplink transmission timing for terminal 200 based on the capability information received from terminal 200.

Note that not supporting, by terminal 200, some of the functions, operations, or processes described in each of the above-described embodiments may be read as restrictions on some of such functions, operations, or processes in terminal 200. For example, information or requests regarding such restrictions may be indicated to base station 100.

The information regarding the capability or restrictions of terminal 200 may be defined, for example, in a standard, or may be implicitly indicated to base station 100 in association with information known to base station 100 or information transmitted to base station 100.

(Control Signal)

In the present disclosure, the downlink control signal (or downlink control information) according to one exemplary embodiment of the present disclosure may be a signal (or information) transmitted in a Physical Downlink Control Channel (PDCCH) in a physical layer, for example, or may be a signal (or information) transmitted in a Medium Access Control Control Element (MAC CE) or a Radio Resource Control (RRC) in a higher layer. Further, the signal (or information) is not limited to that indicated by the downlink control signal, but may be predefined in the specifications (or standard) or may be preconfigured for the base station and the terminal.

In the present disclosure, the uplink control signal (or uplink control information) relating to the exemplary embodiment of the present disclosure may be, for example, a signal (or information) transmitted in a PUCCH of the physical layer or a signal (or information) transmitted in the MAC CE or RRC of the higher layer. In addition, the signal (or information) is not limited to a case of being indicated by the uplink control signal and may be previously specified by the specifications (or standards) or may be previously configured in a base station and a terminal. Further, the uplink control signal may be replaced with, for example, uplink control information (UCI), 1st stage sidelink control information (SCI), or 2nd stage SCI.

(Base Station)

In one exemplary embodiment of the present disclosure, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Furthermore, in the sidelink communication, the terminal may play a role of a base station. Further, instead of the base station, a relay apparatus that relays communication between a higher node and a terminal may be used. Moreover, a road side device may be used.

(Uplink/Downlink/Sidelink)

One exemplary embodiment of the present disclosure may be applied to any of an uplink, downlink, and a sidelink, for example. For example, one exemplary embodiment of the present disclosure may be applied to a Physical Uplink Shared Channel (PUSCH), a Physical Uplink Control Channel (PUCCH), and a Physical Random Access Channel (PRACH) in the uplink, a Physical Downlink Shared Channel (PDSCH), PDCCH or a Physical Broadcast Channel (PBCH) in the downlink, or a Physical Sidelink Shared Channel (PSSCH), a Physical Sidelink Control Channel (PSCCH), a Physical Sidelink Broadcast Channel (PSBCH) in the sidelink.

The PDCCH, the PDSCH, the PUSCH, and the PUCCH are examples of a downlink control channel, a downlink data channel, an uplink data channel, and an uplink control channel, respectively. Further, the PSCCH and the PSSCH are examples of a sidelink control channel and a sidelink data channel, respectively. Further, the PBCH and the PSBCH are examples of a broadcast channel, and the PRACH is an example of a random access channel.

(Data Channels/Control Channels)

One exemplary embodiment of the present disclosure may be applied to any of a data channel and a control channel, for example. For example, in one exemplary embodiment of the present disclosure, a channel in one exemplary embodiment of the present disclosure may be replaced with any of a PDSCH, a PUSCH, and a PSSCH for the data channel, or a PDCCH, a PUCCH, a PBCH, a PSCCH, and a PSBCH for the control channel.

(Reference Signals)

In one exemplary embodiment of the present disclosure, the reference signals are, for example, signals known to both a base station and a mobile station and each reference signal may be referred to as a reference signal (RS) or sometimes a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

(Time Intervals)

In one exemplary embodiment of the present disclosure, the units of time resources are not limited to one or a combination of slots and symbols, but may be time resource units such as, for example, frames, superframes, subframes, slots, time slot subslots, minislots, or symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiments described above and may be other numbers of symbols.

(Frequency Band)

One exemplary embodiment of the present disclosure may be applied to any of a licensed band and an unlicensed band.

(Communication)

One exemplary embodiment of the present disclosure may be applied to any of communication between a base station and a terminal (Uu link communication), communication between a terminal and a terminal (Sidelink communication), and communication of a Vehicle to Everything (V2X). In one example, a channel in one exemplary embodiment of the present disclosure may be replaced with any of a PSCCH, a PSSCH, a Physical Sidelink Feedback Channel (PSFCH), a PSBCH, a PDCCH, a PUCCH, a PDSCH, a PUSCH, and a PBCH.

Further, one exemplary embodiment of the present disclosure may be applied to either of terrestrial networks or a non-terrestrial network (NTN) such as communication using a satellite or a high-altitude pseudolite (High Altitude Pseudo Satellite (HAPS)). Further, one exemplary embodiment of the present disclosure may be applied to a terrestrial network having a large transmission delay compared to the symbol length or slot length, such as a network with a large cell size and/or an ultra-wideband transmission network.

(Antenna Ports)

In one exemplary embodiment of the present disclosure, the antenna port refers to a logical antenna (antenna group) configured of one or more physical antennae. For example, the antenna port does not necessarily refer to one physical antenna and may refer to an array antenna or the like configured of a plurality of antennae. In one example, the number of physical antennae configuring the antenna port may not be specified, and the antenna port may be specified as the minimum unit with which a terminal station can transmit a Reference signal. Moreover, the antenna port may be specified as the minimum unit for multiplying a weight of a Precoding vector.

<5G NR System Architecture and Protocol Stack>

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

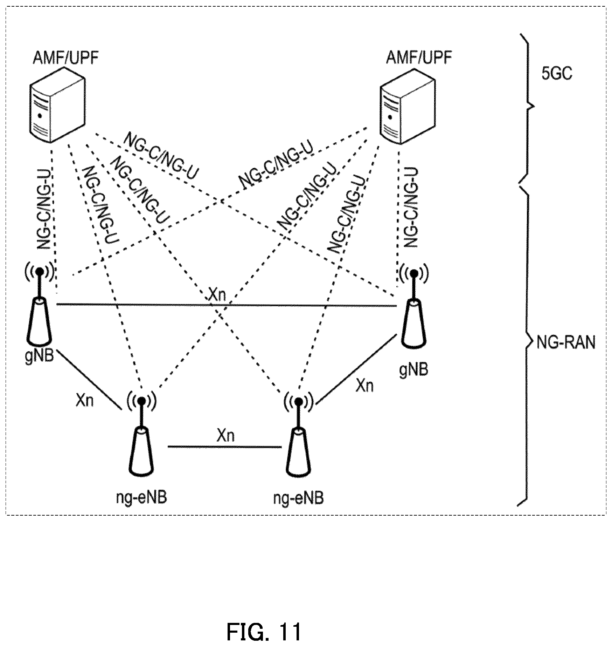

For example, the overall system architecture assumes an NG-RAN (Next Generation-Radio Access Network) that includes gNBs. The gNB provides the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in FIG. 11 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km2 in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, 60 kHz, and so forth. The symbol duration Tu and the subcarrier spacing $\Delta f$ are directly related through the formula $\Delta f = 1/Tu$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grids is called a resource element and is identified based on the frequency index in the frequency domain and the symbol position in the time domain (see 3GPP TS 38.211 v15.6.0).

<Functional Split between NG-RAN and 5GC in 5G NR>

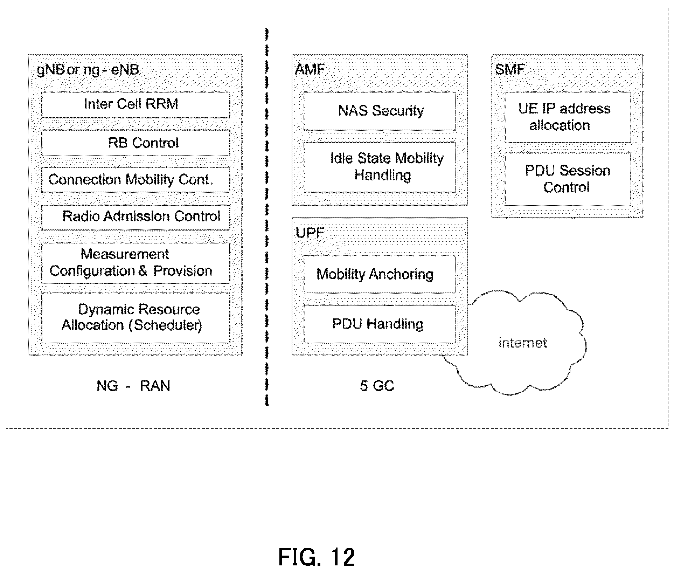

FIG. 12 illustrates the functional split between the NG-RAN and the 5GC. NG-RAN logical node is a gNB or ng-eNB. The 5GC has logical nodes AMF, UPF and SMF.

For example, gNB and ng-eNB hosts the following main functions:

- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or Operation, Admission, Maintenance (OAM));
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:

- Function of Non-Access Stratum (NAS) signaling termination;
- NAS signaling security;
- Access Stratum, AS, Security control;
- Inter-Core Network (CN) node signaling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function (SMF) selection.

Furthermore, the User Plane Function, UPF, hosts the following main functions:

- Anchor point for Intra-/Inter-RAT mobility (when applicable);
- External Protocol Data Unit (PDU) session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Function of downlink packet buffering and downlink data notification triggering.

Finally, the Session Management function, SMF, hosts the following main functions:

- Session Management;
- UE IP address allocation and management;
- Selection and control of UPF;
- Configures traffic steering at User Plane Function, UPF, to route traffic to proper destination;
- Control part of policy enforcement and QoS;
- Downlink data notification.

<RRC Connection Setup and Reconfiguration Procedure>

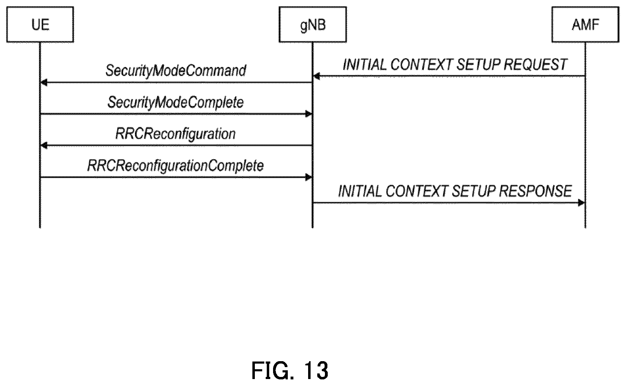

FIG. 13 illustrates some interactions between a UE, gNB, and AMF (a 5GC Entity) performed in the context of a transition of the UE from RRC_IDLE to RRC_CONNECTED for the NAS part (see TS 38 300 v15.6.0).

RRC is a higher layer signaling (protocol) used for UE and gNB configuration. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityMode-Command message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB informs the AMF that the setup procedure is completed with the INITIAL

CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

<Usage Scenarios of IMT for 2020 and beyond>

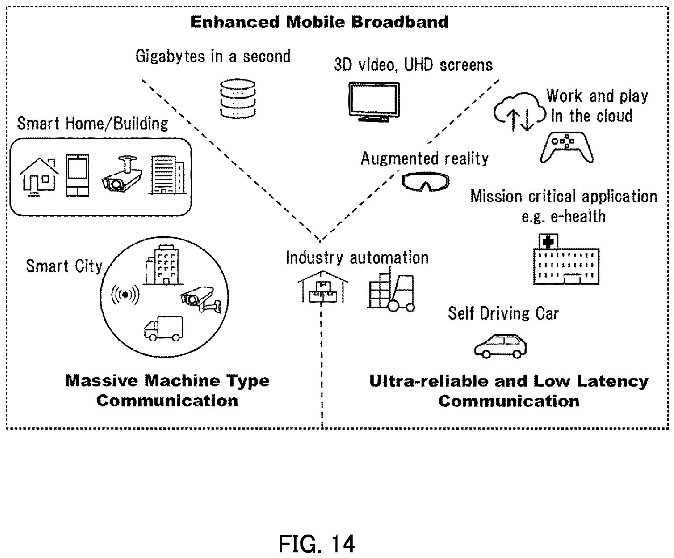

FIG. 14 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 14 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10-6 level), higher availability, packet sizes of up to 256 bytes, time synchronization up to the extent of a few $\mu$s (where the value can be one or a few $\mu$s depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearer (DRB) together with the PDU Session, e.g., as illustrated above with reference to FIG. 13. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

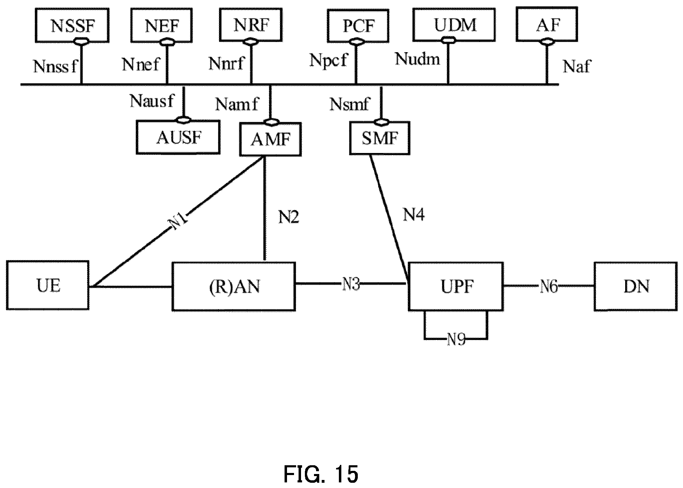

FIG. 15 illustrates a 5G NR non-roaming reference architecture (see TS 23.501 v16.1.0, section 4.23). An Application Function (AF), e.g., an external application server hosting 5G services, exemplarily described in FIG. 14, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 15 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that includes: a transmitter, which, in operation, transmits a request containing a QoS requirement for at least one of URLLC, eMMB and mMTC services to at least one of functions (for example NEF, AMF, SMF, PCF, UPF, etc.) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A base station according to an embodiment of the present disclosure includes: control circuitry, which, in operation, individually configures a first transmission timing of an uplink in a first time resource and a second transmission timing of an uplink in a second time resource different from the first time resource; and reception circuitry, which, in operation, receives a signal based on the first transmission timing and the second transmission timing.

In the embodiment of the present disclosure, the control circuitry configures an offset value for a transmission timing in the first time resource and an offset value for a transmission timing in the second time resource to be different from each other.

In the embodiment of the present disclosure, the control circuitry configures the offset value for the first time resource to be zero.

In the embodiment of the present disclosure, the first time resource is a symbol to which a method for configuring a transmission direction for a plurality of bands each is applied, or a symbol to which the method is possibly applied, the plurality of bands being obtained by dividing a frequency bandwidth.

In the embodiment of the present disclosure, the first time resource is a symbol configured dynamically or semi-statically.

In the embodiment of the present disclosure, the control circuitry configures an offset value common to a transmission timing in the first time resource and a transmission timing in the second time resource, and an offset value specific to the transmission timing in the first time resource.

In the embodiment of the present disclosure, the control circuitry configures a configuration value of a transmission timing in the first time resource and a configuration value of a transmission timing in the second time resource to be different from each other.

A terminal according to an embodiment of the present disclosure includes: control circuitry, which, in operation, individually configures a first transmission timing of an uplink in a first time resource and a second transmission timing of an uplink in a second time resource different from the first time resource; and transmission circuitry, which, in operation, transmits a signal based on the first transmission timing and the second transmission timing.

In a communication method according to an embodiment of the present disclosure, a base station individually configures a first transmission timing of an uplink in a first time resource and a second transmission timing of an uplink in a second time resource different from the first time resource, and receives a signal based on the first transmission timing and the second transmission timing.

In a communication method according to an embodiment of the present disclosure, a terminal individually configures a first transmission timing of an uplink in a first time resource and a second transmission timing of an uplink in a second time resource different from the first time resource, and transmits a signal based on the first transmission timing and the second transmission timing.

The disclosure of Japanese Patent Application No. 2022-128841, filed on August 12, 2022, including the specification, drawings and abstract, is incorporated herein by reference in its entirety.

Industrial Applicability

An exemplary embodiment of the present disclosure is useful for radio communication systems.

Reference Signs List

100 Base station
101, 201 Receiver
102, 202 Demodulator/decoder
103 Scheduler
104, 204 Timing controller
105, 205 Control information holder
106, 206 Data/control information generator
107, 207 Encoder/modulator
108, 208 Transmitter
200 Terminal
203 Controller

**Claims**

1. A base station, comprising:

   control circuitry, which, in operation, individually configures a first transmission timing of an uplink in a first time resource and a second transmission timing of an uplink in a second time resource different from the first time resource; and
   reception circuitry, which, in operation, receives a signal based on the first transmission timing and the second transmission timing.

2. The base station according to claim 1, wherein
   the control circuitry configures an offset value for a transmission timing in the first time resource and an offset value for a transmission timing in the second time resource to be different from each other.

3. The base station according to claim 2, wherein
   the control circuitry configures the offset value for the first time resource to be zero.

4. The base station according to claim 3, wherein
   the first time resource is a symbol to which a method for configuring a transmission direction for a plurality of bands each is applied, or a symbol to which the method is possibly applied, the plurality of bands being obtained by dividing a frequency bandwidth.

5. The base station according to claim 3, wherein
   the first time resource is a symbol configured dynamically or semi-statically.

6. The base station according to claim 1, wherein
   the control circuitry configures an offset value common to a transmission timing in the first time resource and a transmission timing in the second time resource, and an offset value specific to the transmission timing in the first time resource.

7. The base station according to claim 1, wherein
   the control circuitry configures a configuration value of a transmission timing in the first time resource and a configuration value of a transmission timing in the second time resource to be different from each other.

8. A terminal, comprising:

   control circuitry, which, in operation, individually configures a first transmission timing of an uplink in a first time resource and a second transmission timing of an uplink in a second time resource different from the first time resource; and
   transmission circuitry, which, in operation, transmits a signal based on the first transmission timing and the second transmission timing.

9. A communication method, comprising:

   configuring, by a base station, individually a first transmission timing of an uplink in a first time resource and a second transmission timing of an uplink in a second time resource different from the first time resource; and
   receiving, by the base station, a signal based on the first transmission timing and the second transmission timing.

10. A communication method, comprising:

    configuring, by a terminal, individually a first transmission timing of an uplink in a first time resource and a second transmission timing of an uplink in a second time resource different from the first time resource; and
    transmitting, by the terminal, a signal based on the first transmission timing and the second transmission timing.

(a) Half duplex (TDD)

(b) Subband non-overlapping full duplex

FIG. 1

EP 4 572 477 A1

| | |
|---|---|
| **Slot structure** | |
| DOWNLINK TRANSMISSION TIMING OF BASE STATION | |
| DOWNLINK RECEPTION TIMING OF TERMINAL | |
| UPLINK TRANSMISSION TIMING OF TERMINAL | |
| UPLINK RECEPTION TIMING OF BASE STATION | |

FIG. 2

EP 4 572 477 A1

EP 4 572 477 A1

FIG. 3

100

CONTROLLER → RECEIVER

FIG. 4

200

CONTROLLER → TRANSMITTER

FIG. 5

FIG. 6

100

- 108 TRANSMITTER
- 107 ENCODER/MODULATOR
- 106 DATA/CONTROL INFORMATION GENERATOR
- 104 TIMING CONTROLLER
- 103 SCHEDULER
- 105 CONTROL INFORMATION HOLDER
- 101 RECEIVER
- 102 DEMODULATOR/DECODER

FIG. 7

FIG. 8

EP 4 572 477 A1

FIG. 9

METHOD 1

METHOD 2

METHOD 3

FIG. 10

**FIG. 11**

| gNB or ng - eNB | AMF | SMF |
|---|---|---|
| Inter Cell RRM | NAS Security | UE IP address allocation |
| RB Control | Idle State Mobility Handling | PDU Session Control |
| Connection Mobility Cont. | | |
| Radio Admission Control | UPF | |
| Measurement Configuration & Provision | Mobility Anchoring | |
| Dynamic Resource Allocation (Scheduler) | PDU Handling | internet |

NG - RAN

5 GC

**FIG. 12**

FIG. 13

**Enhanced Mobile Broadband**

Gigabytes in a second

3D video, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

FIG. 14

FIG. 15

**EP 4 572 477 A1**

### INTERNATIONAL SEARCH REPORT

| International application No. |
|---|
| **PCT/JP2023/016440** |

| A. | CLASSIFICATION OF SUBJECT MATTER |
|---|---|

*H04W 72/0446*(2023.01)i; *H04W 28/06*(2009.01)i; *H04W 72/0453*(2023.01)i; *H04W 72/1268*(2023.01)i
FI: H04W72/0446; H04W72/0453; H04W72/1268; H04W28/06 130

According to International Patent Classification (IPC) or to both national classification and IPC

| B. | FIELDS SEARCHED |
|---|---|

Minimum documentation searched (classification system followed by classification symbols)

H04W72/0446; H04W28/06; H04W72/0453; H04W72/1268

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | LG ELECTRONICS. Study on Subband non-overlapping full duplex[online]. 3GPP TSG RAN WG1 #109-e R1-2204530. 29 April 2022 <br> sections 2.1, 2.2 | 1, 2, 6-10 |
| Y | | 3-5 |
| Y | HUAWEI. HISILICON. Discussion on subband non-overlapping full duplex[online]. 3GPP TSG RAN WG1 #109-e R1-2203157. 29 April 2022 <br> section 2.2.4 | 3-5 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 June 2023** | **11 July 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2022128841 A

**Non-patent literature cited in the description**

• NR; Physical channels and modulation (Release 17). *3GPP TS 38.211 V17.2.0*, June 2022
• NR; Multiplexing and channel coding (Release 17). *3GPP TS 38.212 V17.2.0*, June 2022
• NR; Physical layer procedure for control (Release 17). *3GPP TS 38.213 V17.2.0*, June 2022
• NR; Physical layer procedures for data (Release 17). *3GPP TS 38.214 V17.2.0*, June 2022
• NR; Physical layer measurements (Release 17). *3GPP TS 38.215 V17.1.0*, June 2022
• NR; Radio Resource Control (RRC) protocol specification (Release 17). *3GPP TS 38.331 V17.1.0*, June 2022